(19) Europäisches Patentamt
European Patent Office
Office européen des brevets

(11) **EP 2 784 745 A1**

(12) **EUROPEAN PATENT APPLICATION**
published in accordance with Art. 153(4) EPC

(43) Date of publication:
**01.10.2014 Bulletin 2014/40**

(51) Int Cl.:
*G06T 1/00* (2006.01)     *B60Q 1/14* (2006.01)
*G08G 1/16* (2006.01)

(21) Application number: **12850902.3**

(22) Date of filing: **24.10.2012**

(86) International application number:
**PCT/JP2012/077389**

(87) International publication number:
**WO 2013/077132 (30.05.2013 Gazette 2013/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.11.2011   JP 2011253421**

(71) Applicant: **Hitachi Automotive Systems, Ltd.
Hitachinaka-shi
Ibaraki 312-8503 (JP)**

(72) Inventor: **OTSUKA Yuji
Hitachinaka-shi
Ibaraki 312-8503 (JP)**

(74) Representative: **MERH-IP
Matias Erny Reichl Hoffmann
Paul-Heyse-Strasse 29
80336 München (DE)**

(54) **IMAGE PROCESSING APPARATUS**

(57)      In order to extract, given information from a stereo camera, only the headlights of an oncoming vehicle or the taillights of a preceding vehicle from various light spot at night for the purpose of offering the driver a safer field of view, there are provided: first distance information calculation means which calculates information on a first distance to a detection object candidate from two images obtained by a first imaging element and a second imaging element; second distance information calculation means which calculates information on a second distance to the detection object candidate from the image obtained by the first imaging element; and object detection means which compares the first distance information with the second distance information to detect the object from the detection object candidate on the basis of the result of the comparison.

FIG.12

**Description**

Technical Field

The present invention relates to an image processing apparatus that detects an object from images taken by an imaging element mounted on a moving body.

Background Art

Research and development have been devoted to light distribution control technology for switching an automatic high and low beam headlight by means of analysis of light spots in images taken with an onboard camera at night to determine presence/absence of oncoming and preceding vehicles.

Patent Document 1 describes techniques for detecting the taillights of the preceding vehicle and headlights of the oncoming vehicle so as to switch the own headlights from high to low beam thereby not to dazzle drivers in the preceding and oncoming vehicles. There is no need for the driver to be on the lookout for preceding and oncoming vehicles to perform high/low beam switch. The driver hence can concentrate on driving.

However, the driver may get a sense of awkwardness if the timing of switching control is not appropriate. The principal cause of such inappropriate control is oversight by camera of the taillights of the preceding vehicle or the headlights of the oncoming vehicle, as well as false detection of other light sources. The false detection includes overlooking dim taillights and misdetecting ambient lights like delineators of the road, traffic signals, and street lamps as vehicle lights. These irregularities of detection lead to malfunction. The challenge of technology is how to minimize the detection irregularities.

Patent Document 1 depicts means for detecting two light sources as a light source pair. Since the headlights of the oncoming vehicle or the taillights of the preceding vehicle are a pair of light sources positioned right and left horizontally, the detected light sources are attempted to be a pair. Determination if they belong to another vehicle is based on whether their pairing has been successful. The distance between the paired light sources is used to calculate an approximate distance to the light sources.

Prior Art Literature

Patent Document

[PTL 1]
Japanese Patent No. 3503230

Summary of the Invention

Problem to be Solved by the Invention

As in the example above, whether the detected light sources are those of another vehicle is conventionally based on if they can be paired. These light sources, however, can be paired and erroneously recognized as belonging to another vehicle when there are two sets, one on the left and the other on the right, of traffic signals installed on a heavily trafficked road, for example. The traffic lights are generally set up high above the road, so that they appear up above when imaged on the screen and can be distinguished from the light sources of other vehicles as long as one is near the traffic lights. When the traffic signals, on the contrary, are 200 to 300 meters or more away, they appear near a vanishing point on the screen, making it is difficult to distinguish them by height information.

An object of the present invention is to extract, given information from a stereo camera, only the headlights of the oncoming vehicle and the taillights of the preceding vehicle from among various light spots at night so as to offer the driver a safer field of view.

Means for Solving the Problem

In order to attain the above object, there is provided a structure including: first distance information calculation means which calculates information on a first distance to a detection object candidate from two images obtained by a first imaging element and a second imaging element; second distance information calculation means which calculates information on a second distance to the detection object candidate from the image obtained by the first imaging element; and object detection means which compares the first distance information with the second distance information to detect an object from the detection object candidate on the basis of the result of the comparison.

Effect of the Invention

On the basis of the information obtained through the stereo camera, only the headlights of the oncoming vehicle or the taillights of the preceding vehicle are extracted from various light spots at night to offer the driver a safer field of view.

Brief Description of the Drawings

Fig. 1 is a diagram showing a typical configuration of an adaptive driving beam control method including an image processing apparatus according to the present invention.

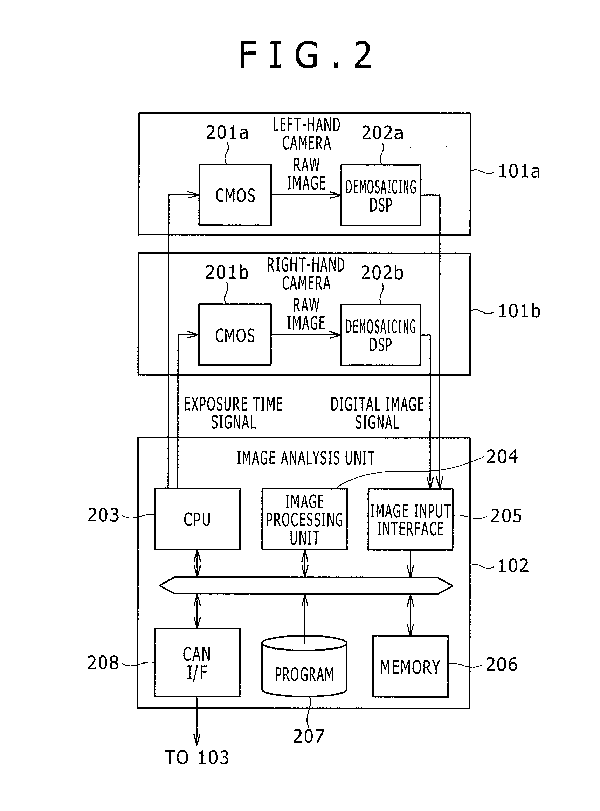

Fig. 2 is a diagram showing typical structures of a camera and an image signal processing unit indicated in Fig. 1.
Fig. 3 is a diagram explaining the relation between the camera and headlight indicated in Fig. 1.
Fig. 4 is a diagram explaining a Bayer array of color filters over CMOS's indicated in Fig. 2.
Fig. 5 is a set of diagrams explaining a demosaicing process performed by the CMOS's indicated in Fig. 2.
Fig. 6 is a diagram explaining a UV image given by demosaicing DSP's indicated in Fig. 6.
Fig. 7 is a set of diagrams showing the relation between a binary image and a label image of the image processing apparatus according to the present invention.
Fig. 8 is a set of diagrams explaining how the light spots of taillights and traffic signals can be seen.
Fig. 9 is a diagram explaining the positional relation between taillights and traffic signals.
Fig. 10 is a diagram explaining a method for measuring the distance to the taillights of a preceding vehicle with the use of a monocular camera of the image processing apparatus according to the present invention.
Fig. 11 is a diagram explaining a method for measuring the distance to the taillights of a preceding vehicle with the use of a stereo camera of the image processing apparatus according to the present invention.
Fig. 12 is a flowchart showing a flow of processing by the image processing apparatus according to the present invention.

Mode for Carrying out the Invention

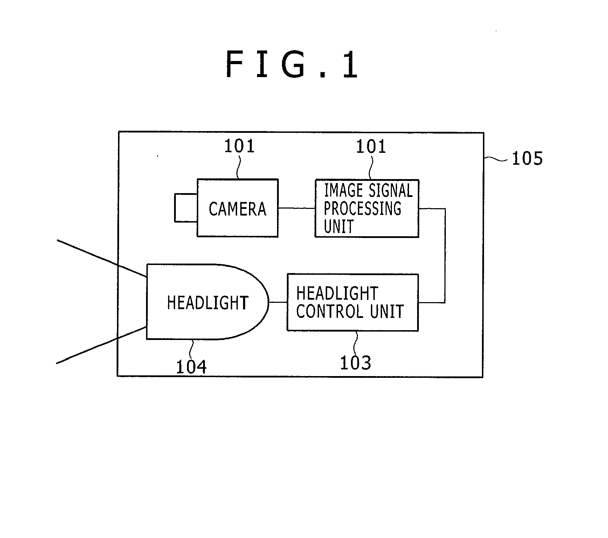

Fig. 1 is a schematic diagram showing an overall configuration for implementing an adaptive driving beam control method involving an image processing apparatus as an embodiment of the present invention.

A camera 101 serving as the imaging device is installed in a headlight unit 105 to capture the field of view ahead of the vehicle, and headlight 104 are also installed in the headlight unit 105 to illuminate the front of the vehicle. Images of the front of the vehicle are obtained with the camera 101 and input to an image signal processing unit 102. Given the images, the image signal processing unit 102 calculates the number and the positions of the headlights of an oncoming vehicle in front of the vehicle and those of the taillights of the preceding vehicle. Information from the calculation is sent to a headlight control unit 103. If there are neither the headlights of an oncoming vehicle nor the taillights of a preceding vehicle, the image signal processing unit 102 serving as the imaging processing apparatus sends information of absence to the headlight control unit 103. On receiving the information, the headlight control unit 103 determines whether the headlight 104 is to be switched to high or low beam and controls the headlight 104 accordingly.

With regard to the position of the respective units, the camera 101 and headlight 104 should preferably be located as close to each other as possible. This contributes to simplifying calibration such as optical axis adjustment.

The camera 101 may be positioned on the back of the rearview mirror, for example, to capture the field of view ahead of the vehicle when the headlight unit 105 does not have enough space inside to accommodate the camera 101.

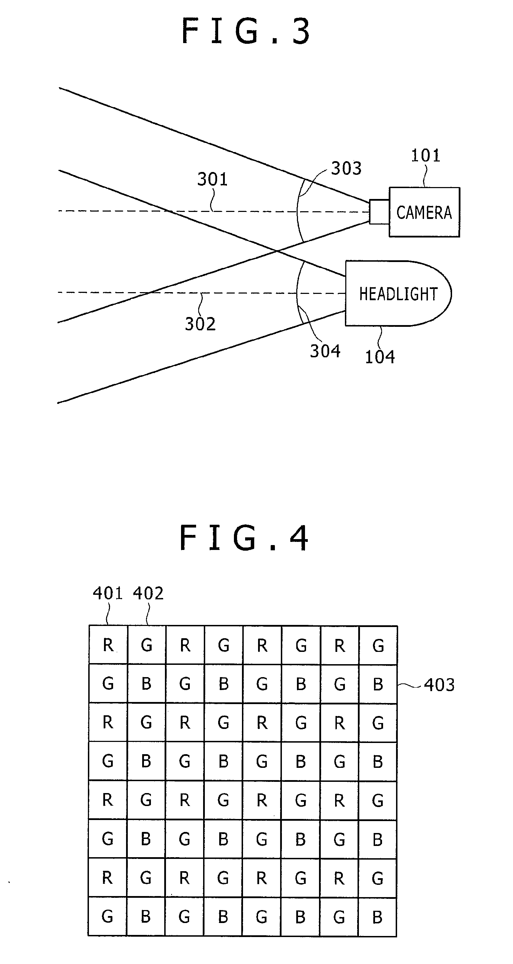

Further, an optical axis 301 of the camera 101 serving as the imaging device is held parallel to an optical axis 302 of the headlight 104 as shown in Fig. 3. Without optical axis being parallel, there would be a discrepancy between the spatial position imaged by the camera 101 and that illuminated by the headlight 104. Also, a field angle 303 of the camera is set equal to or greater than an illuminating angle 304 of the headlight 104.

A method for detecting the headlights of the oncoming vehicle and the taillights of the preceding vehicle by use of the camera 101 will now be explained.

Fig. 1 is a diagram showing an internal structure of the camera 101 serving as the imaging device and the image signal processing unit 102 as the image processing apparatus.

The camera 101 is a stereo camera having a right-hand camera 101b (first imaging device) and a left-hand camera 101a (second imaging device).

The cameras have CMOS's 201a, 201b (Complementary Metal Oxide Semiconductors) serving as imaging elements in which photodiodes for converting light to electrical charges are arrayed in a grid-like pattern. The surface of the pixels is furnished with color filters of red (R), green (G), and blue (B) in a Bayer array as shown in Fig. 4.

In this structure, red light alone is incident on pixels 401, green light alone on pixels 402, and blue light alone on pixels 403. Raw images obtained by the CMOS's 201a, 201b with the Bayer array are transferred to demosaicing DSP's 202a, 202b that are demosaicing processors installed in the cameras.

The demosaicing DSP's 202a, 202b serving as the demosaicing processors perform a demosaicing process and then convert RGB images to a Y image and a UV image that are transmitted to an image input interface 205 of the image signal processing unit 102 serving as the image processing apparatus.

Below is an explanation of how a color reproduction (demosaicing) process is performed by an ordinary color CMOS having the Bayer array.

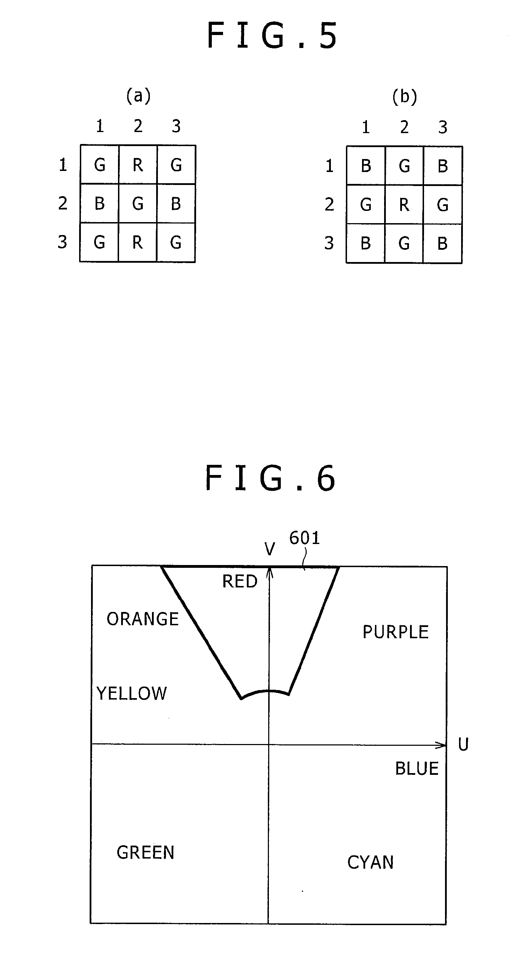

Each pixel can measure the intensity of only one of three colors: red (R), green (G), and blue (B). Any other color at that pixel is estimated by way of referencing the surrounding colors. For example, R, G, and B for a pixel $G_{22}$ in the middle of Fig. 5A are each obtained with the use of the following mathematical expression (1):

[Math. 1]

$$\begin{cases} R = \dfrac{R_{12} + R_{32}}{2} \\ G = G_{22} \\ B = \dfrac{B_{21} + B_{23}}{2} \end{cases}$$

$$\dots \text{Exp. (1)}$$

Likewise, R, G, and B for a pixel $R_{22}$ in the middle of Fig. 5B are each obtained with the use of the following mathematical expression (2):

[Math. 2]

$$\begin{cases} R = R_{22} \\ G = \dfrac{G_{21} + G_{12} + G_{32} + G_{23}}{4} \\ B = \dfrac{B_{11} + B_{13} + B_{31} + B_{33}}{4} \end{cases}$$

$$\dots \text{Exp. (2)}$$

The colors for the other pixels can also be obtained in the same manner. This makes it possible to calculate the three primary colors R, G, and B for all pixels configured, whereby an RGB image may be obtained. Furthermore, luminosity Y and color difference signals U, V are obtained for all pixels with the use of the mathematical expression (3) below, whereby a Y image and a UV image are generated.

[Math. 3]

$$\begin{cases} Y = 0.299R + 0.587G + 0.114B \\ U = -0.169R - 0.331G + 0.500B \\ V = 0.500R - 0.419G - 0.081B \end{cases}$$

$$\dots \text{Exp. (3)}$$

In the Y image, the pixels are represented by eight-bit data ranging from 0 to 255. This means that the closer the data to 255 is, the brighter the pixel is.

Image signals are transmitted continuously, and the head of each of the signals includes a synchronization signal. This allows the image input interface 205 to input only the images at a necessary timing.

The images input through the image input interface 205 are written to a memory 206, a storage unit. The stored images are processed and analyzed by an image processing unit 204. The processing will be discussed later in detail. A series of processes is carried out in accordance with program 207 written in a flash ROM. A CPU 203 performs control and carries out necessary calculations for the image input interface 205 to input images and for the image processing unit 204 to process the images.

The CMOS's 201a, 201b serving as the imaging elements each incorporate an exposure control unit for performing exposure control and a register for setting exposure time. The CMOS's 201a, 201b obtain images with the use of the exposure time set on the registers. The content of the registers can be updated by the CPU 203 serving as a processor. The updated exposure time is reflected in image acquisition after the subsequent frame or the following field. The exposure time can be controlled electronically to limit the amount of light hitting the CMOS's 201a, 201b. Whereas exposure time control may be implemented through such an electronic shutter method, a mechanical shutter on/off method may be adopted just as effectively. As another alternative the exposure value may be varied by adjusting a diaphragm. Where exposure is manipulated every other line of image as in interlace, the exposure value may be varied between odd-numbered and even-numbered lines.

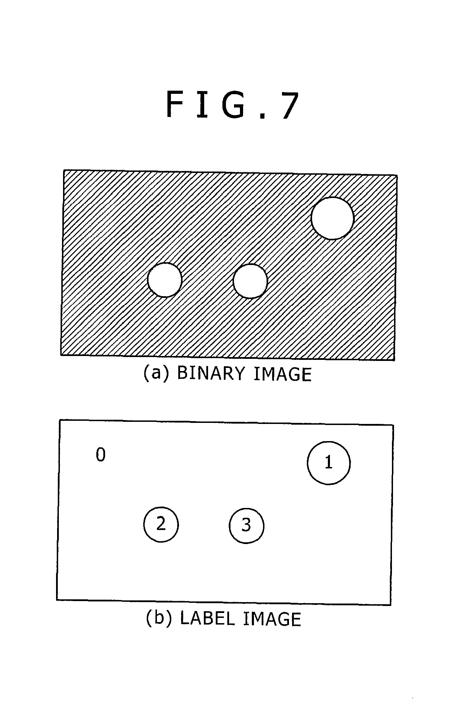

In detecting the headlights and taillights, it is necessary to detect the positions of light spots in images. The positions of high luminance only need to be detected in the case of the headlight. Thus the Y image obtained with the expression (3) is binarized with regard to a predetermined luminosity threshold value MinY. The positions whose luminance is equal to or higher than MinY are set to 1's, and those whose luminance is less than MinY are set to 0's. This creates a binary image such as one shown in Fig. 7A. Regarding the taillights that are red lights, the UV image is analyzed and the light spots having the red component are detected. Specifically, the image processing unit 204 is used to perform the following calculations:

[Math. 4]

$$\begin{cases} \rho = \sqrt{U^2 + V^2} \\ \theta = 57.296 \times \tan^{-1}\left(\dfrac{V}{U}\right) \end{cases}$$

$$\dots \text{Exp. (4)}$$

Values p and $\theta$ are calculated with the use of the expression (4) above. If the luminosity threshold value MinY is set to 30, a chroma threshold value MinRho to 30, a chroma threshold value MinRho to 181, a hue threshold value MinTheta to 80, and a hue threshold value MaxTheta to 120, then it is possible to detect the red light spots having the color of red within the range of a red region 601 shown in Fig. 6.

This binary image is subsequently labeled, so that light spot regions can be extracted. The labeling is an image process that involves attaching the same labels to related pixels. The resulting label image is as shown in Fig. 7B. The regions can be analyzed easily since each light region has different labels. The labeling process is also performed by the image processing unit 204.

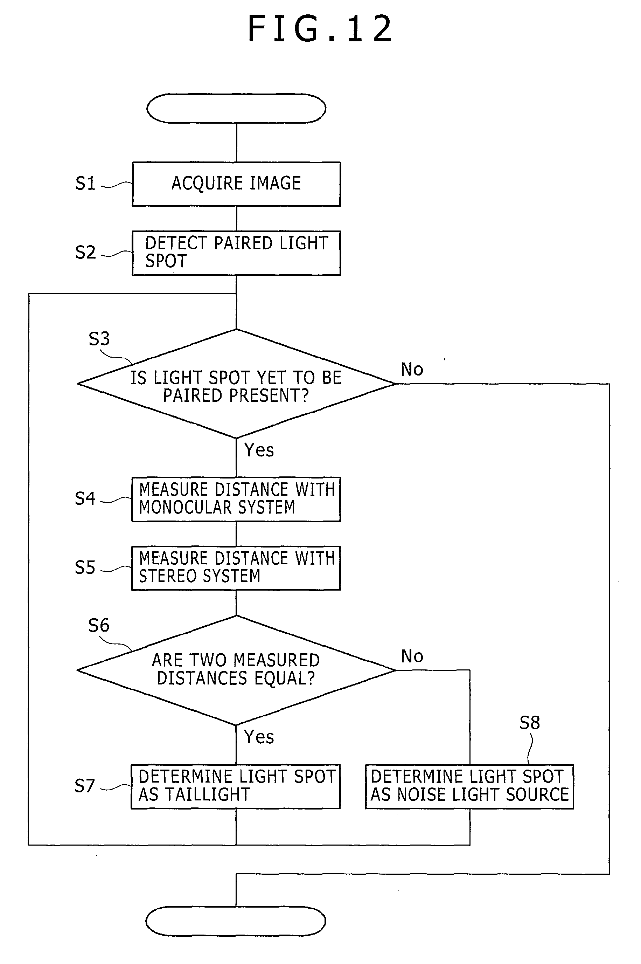

Fig. 12 is a flowchart showing a flow of the process for identifying taillight spots as the main theme of this embodiment. The ensuing explanation, also applicable to the case of headlight, is about an example of the detection of taillights entailing the likelihood of falsely detecting red traffic lights as taillights.

In step S1, images are first acquired through image acquisition means. An image is obtained from the left-hand camera in the stereo camera serving as the second imaging element CMOS 201a, and another image from the right-hand camera which is the first imaging element CMOS 201b.

In step S2, light spot pair detection means is used to perform image processing for detecting paired light spots from the images. First, the images are subjected to the above-mentioned YUV conversion so as to extract and label red light spots from the UV image. Then, the positions and sizes of the labeled light spots are analyzed for pairing. The pairing of light spots is conducted under the condition that the elevations (y coordinates) of two light spots are approximately the same and that they are about the same in size and are not too far apart. When paired light spots have been detected, step S3 is reached and verification is performed as many times as the number of the detected pairs.

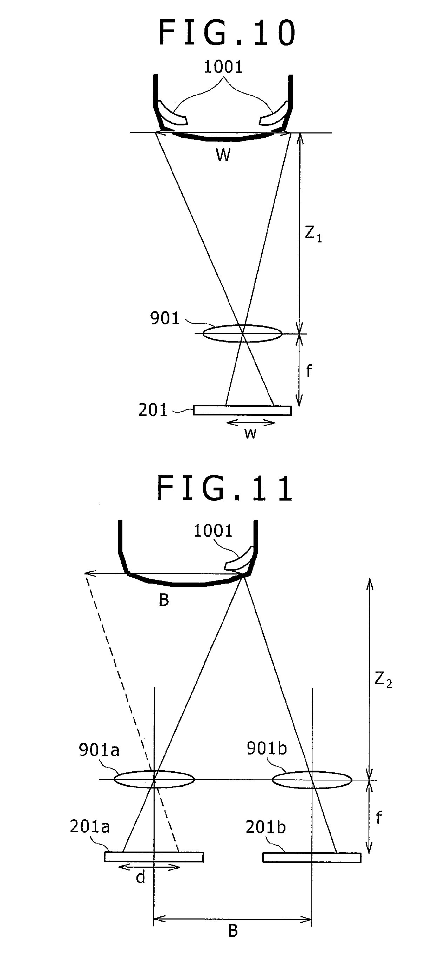

In step S4, second distance information calculation means is used to calculate the distance to the light spots through a monocular system. With reference to Fig. 10, it is assumed that reference character $Z_1$ stands for the distance to the preceding vehicle (second distance information), W for the width of taillights 1001 of the preceding vehicle, f for the focal length between a lens 901 and the CMOS 201, and w for the width of the taillights 1001 imaged on the CMOS. On that assumption, the distance $Z_1$ can be defined with the following mathematical expression on the basis of a trigonometric scale factor:

[Math. 5]

$$Z_1 = \frac{Wf}{w}$$

... Exp. (5)

Whereas the width W of the taillights 1001 of the preceding vehicle is an unknown that cannot be measured, that quantity may be assumed to be the general vehicle width of, say, 1.7 meters.

In step S5, first distance information calculation means is used to calculate the distance to the light spots through a stereo system. With reference to Fig. 11, it is assumed that reference character $Z_2$ stands for the distance to the preceding vehicle (first distance information), B for a base line length that is the distance between a right-hand optical axis and a left-hand optical axis, f for the focal length, and d for a disparity on the CMOS. On that assumption, the distance $Z_2$ can be obtained through the following mathematical expression on the basis of a trigonometric scale factor:
[Math. 6]

$$Z_2 = \frac{Bf}{d}$$

... Exp. (6)

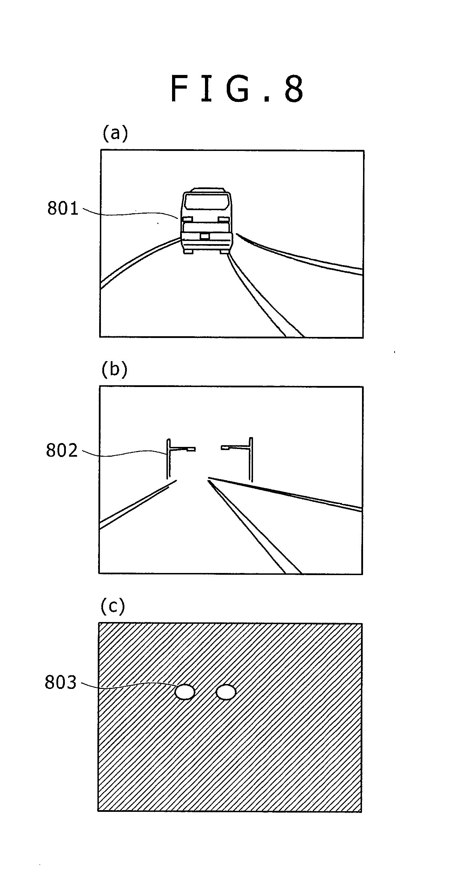

In step S6, object detection means is used to compare in magnitude the distance $Z_1$ serving as the second distance information with the distance $Z_2$ serving as the first distance information. Specifically, it is determined whether the distance $Z_1$ is equal to the distance $Z_2$. In the example of Figs. 8A and 8B, a preceding vehicle 801 and traffic signals 802 may both appear similar as with light spots 803 in Fig. 8C if the light spots are only visible at night.

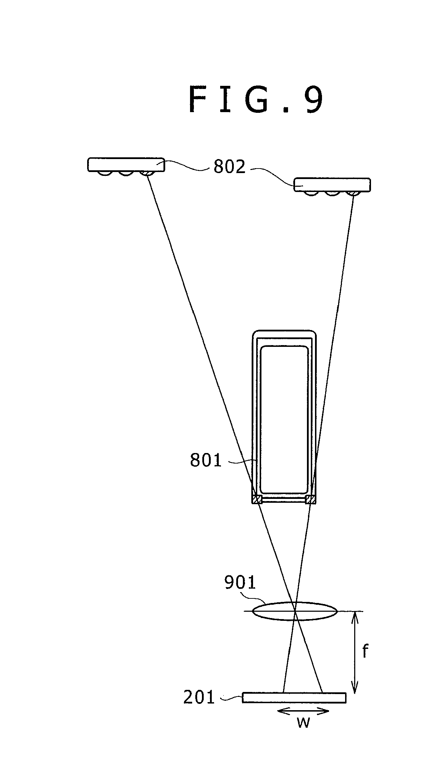

Fig. 9 is a diagram showing the positional relation in effect when the situation of Fig. 8 is seen from above. In practice, the traffic signals 802 are located farther away than the preceding vehicle 801.

That is, although the distance $Z_1$ is the same relative to the preceding vehicle 801 and the traffic signals 802, the distance $Z_2$ is longer to the traffic signals 802 than to the preceding vehicle 801. Since the width W of the taillights 1001 ahead is set to that of the preceding vehicle 801 in the expression (5), the relation $Z_1 \approx Z_2$ holds in the case of the traffic signals 802, and $Z_1 << Z_2$ in the case of the traffic signals 802.

As a result, the light spots are determined to be the taillights in step S7 when the distances are approximately the same; the light spots are determined to be noise light sources in step S8 when the distances are different.

According to the present invention, as described above, the object detection means is configured to compare the first distance information calculated by the stereo method with the second distance information calculated by the monocular method and detect the object (the headlights of the oncoming vehicle or the taillights of the preceding vehicle) from among the detection object candidates (paired light spots) on the basis of the result of the comparison. In this configuration, the information obtained from the stereo camera is used as the basis for extracting only the headlights of the oncoming vehicle or the taillights of the preceding vehicle from among various light spots at night. This boosts the reliability of light distribution control and offers the driver a safer field of view.

Although this embodiment has been explained in terms of the difference between the distances measured by the monocular camera and the stereo camera being utilized, similar implementation can be achieved through the combination of the monocular camera and radar.

Description of Reference Characters

| | |
|---|---|
| 101 | Camera |
| 102 | Image signal processing unit |
| 103 | Headlight control unit |
| 104 | Headlight |
| 201a, 201b | CMOS |
| 202a, 202b | Demosaicing DSP |

| 203 | CPU |
|---|---|
| 204 | Image processing unit |
| 205 | Image input interface |
| 206 | Memory |
| 207 | Program |
| 208 | CAN interface |
| 301 | Optical axis of camera |
| 302 | Optical axis of headlight |
| 303 | Field angle of camera |
| 304 | Illuminating angle of headlight |
| 401, 402, 403 | Pixels |
| 601 | Red region |
| 801 | Preceding vehicle |
| 802 | Traffic signals |
| 803 | Light spots |
| 901 | Lens |
| 1001 | Taillights of preceding vehicle |

**Claims**

1.  An image processing apparatus comprising:

    first distance information calculation means which calculates information on a first distance to a detection object candidate according to two images obtained through a first imaging element and a second imaging element;
    second distance information calculation means which calculates information on a second distance to the detection object candidate according to the image obtained through the first imaging element, and
    object detection means which compares the first distance information with the second distance information to detect an object from the detection object candidate on a basis of a result of the comparison.

2.  The image processing apparatus according to claim 1, wherein the object detection means determines that the detection object candidate is a taillight of a preceding vehicle or a headlight of an oncoming vehicle when the first distance information is equal to the second distance information in distance.

3.  The image processing apparatus according to claim 1, wherein the object detection means determines that the detection object candidate is not a detection object when the first distance information is different from the second distance information in distance.

4.  The image processing apparatus according to claim 1, further comprising:

    light spot pair detection means which extracts red light spots from the two images obtained through the first and the second imaging elements to detect paired light spots from the extracted red light spots, wherein
    the first distance information calculation means and the second distance information calculation means calculate the distance to the paired light spots.

5.  An image processing system comprising:

    a first imaging device having a first imaging element;
    a second imaging device having a second imaging element, and
    an image processing apparatus which acquires an image from the first imaging device and an image from the second imaging device to detect an object, wherein the image processing apparatus includes:

        image acquisition means which acquires an image from the first imaging device and an image from the second imaging device;
        first distance information calculation means which calculates information on a first distance to a detection object candidate on the basis of the two images;
        second distance information calculation means which calculates information on a second distance to the detection object candidate on the basis of the image acquired from the first imaging device, and

object detection means which compares the first distance information with the second distance information to detect an object from the detection object candidate on the basis of the result of the comparison.

6. The image processing system according to claim 5, wherein the first and the second imaging elements are an imaging element in which a photodiode for converting light to an electrical charge is arrayed in a grid-like pattern.

7. The image processing system according to claim 5, wherein the object detection means determines that the detection object candidate is a taillight of a preceding vehicle or a headlight of an oncoming vehicle when the first distance information is equal to the second distance information in distance.

8. The image processing system according to claim 5, wherein the object detection means determines that the detection object candidate is not a detection object when the first distance information is different from the second distance information in distance.

9. The image processing system according to claim 5, further comprising light spot pair detection means which extracts red light spots from the two images obtained through the first and the second imaging elements to detect paired light spots from the extracted red light spots,
wherein the first distance information calculation means and the second distance information calculation means calculate the distances to the paired light spots.

10. A headlight unit comprising:

a first imaging device having a first imaging element;
a second imaging device having a second imaging element;
an image processing apparatus which acquires an image from the first imaging device and an image from the second imaging device to detect an object;
a headlight; and
a headlight control unit which controls the headlight on the basis of the detected object, wherein the image processing apparatus includes:

image acquisition means which acquires an image from the first imaging device and an image from the second imaging device;
first distance information calculation means which calculates information on a first distance to a detection object candidate on the basis of the two images;
second distance information calculation means which calculates information on a second distance to the detection object candidate on the basis of the image acquired from the first imaging device, and
object detection means which compares the first distance information with the second distance information to detect an object from the detection object candidate on the basis of the result of the comparison.

11. The headlight unit according to claim 10, wherein:

the object detection means of the image processing apparatus determines that the detection object candidate is a taillight of a preceding vehicle or a headlight of an oncoming vehicle when the first distance information is equal to the second distance information in distance; and
the headlight control unit performs control to switch the headlight to low beam when it is determined that the detection object candidate is the taillight of the preceding vehicle or the headlight of the oncoming vehicle.

12. The headlight unit according to claim 10,
wherein the object detection means of the image processing apparatus determines that the detection object candidate is not a detection object when the first distance information is different from the second distance information in distance.

13. The headlight unit according to claim 10, wherein:

the image processing apparatus extracts red light spots from the two images obtained through the first and the second imaging elements to detect paired light spots from the extracted red light spots; and
the first distance information calculation means and the second distance information calculation means of the image processing apparatus calculate the distance to the paired light spots.

14. The headlight unit according to claim 10,
    wherein the optical axes of the first imaging device, the second imaging device, and the headlight are parallel to one another.

# F I G . 1

# F I G . 2

LEFT-HAND CAMERA

201a    202a

CMOS → RAW IMAGE → DEMOSAICING DSP

~101a

RIGHT-HAND CAMERA

201b    202b

CMOS → RAW IMAGE → DEMOSAICING DSP

~101b

EXPOSURE TIME SIGNAL          DIGITAL IMAGE SIGNAL

IMAGE ANALYSIS UNIT          204

203~ CPU          IMAGE PROCESSING UNIT          IMAGE INPUT INTERFACE          205

~102

208~ CAN I/F          PROGRAM          MEMORY          206

TO 103          207

# FIG.3

# FIG.4

# FIG.5

(a)

|   | 1 | 2 | 3 |
|---|---|---|---|
| 1 | G | R | G |
| 2 | B | G | B |
| 3 | G | R | G |

(b)

|   | 1 | 2 | 3 |
|---|---|---|---|
| 1 | B | G | B |
| 2 | G | R | G |
| 3 | B | G | B |

# FIG.6

V  601

RED

ORANGE

PURPLE

YELLOW

U

BLUE

GREEN

CYAN

# F I G . 7

(a) BINARY IMAGE

(b) LABEL IMAGE

# FIG.8

(a)

801

(b)

802

(c)

803

# FIG.9

# FIG.10

# FIG.11

# FIG.12

```
            ( START )
              │
  S1 ──  ┌──────────────────┐
         │  ACQUIRE IMAGE    │
         └──────────────────┘
              │
  S2 ──  ┌──────────────────┐
         │  DETECT PAIRED    │
         │  LIGHT SPOT       │
         └──────────────────┘
              │
  S3          ◇
         IS LIGHT SPOT YET TO BE ──── No
         PAIRED PRESENT?
              │ Yes
  S4 ──  ┌──────────────────┐
         │ MEASURE DISTANCE  │
         │ WITH MONOCULAR    │
         │ SYSTEM            │
         └──────────────────┘
              │
  S5 ──  ┌──────────────────┐
         │ MEASURE DISTANCE  │
         │ WITH STEREO       │
         │ SYSTEM            │
         └──────────────────┘
              │
  S6          ◇
         ARE TWO MEASURED ──── No
         DISTANCES EQUAL?
              │ Yes
  S7 ──  ┌──────────────┐   ┌──────────────────┐ ── S8
         │ DETERMINE    │   │ DETERMINE LIGHT   │
         │ LIGHT SPOT   │   │ SPOT AS NOISE     │
         │ AS TAILLIGHT │   │ LIGHT SOURCE      │
         └──────────────┘   └──────────────────┘
              │
            ( END )
```

**INTERNATIONAL SEARCH REPORT**

| International application No. |
| --- |
| PCT/JP2012/077389 |

A. CLASSIFICATION OF SUBJECT MATTER
*G06T1/00*(2006.01)i, *B60Q1/14*(2006.01)i, *G08G1/16*(2006.01)n

According to International Patent Classification (IPC) or to both national classification and IPC

B. FIELDS SEARCHED

Minimum documentation searched (classification system followed by classification symbols)
G06T1/00, B60Q1/14, G08G1/16

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 10-38560 A (Toyota Motor Corp.), 13 February 1998 (13.02.1998), entire text; all drawings (Family: none) | 1-14 |
| A | JP 3503230 B1 (Denso Corp.), 19 December 2003 (19.12.2003), entire text; all drawings (Family: none) | 1-14 |

☐ Further documents are listed in the continuation of Box C.  ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 18 December, 2012 (18.12.12) | 25 December, 2012 (25.12.12) |

| Name and mailing address of the ISA/<br>　　Japanese Patent Office | Authorized officer |
| --- | --- |
| Facsimile No. | Telephone No. |

Form PCT/ISA/210 (second sheet) (July 2009)

**EP 2 784 745 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3503230 B